# EUROPÄISCHE PATENTSCHRIFT

(11) **EP 1 078 300 B1**
(45) Veröffentlichungstag und Bekanntmachung des Hinweises auf die Patenterteilung: **19.03.2003**
(21) Anmeldenummer: 99923593.0
(22) Anmeldetag: 14.05.1999
(51) Int. Cl.: G03B 21/56, G03B 31/00

(54) **Projektionswand**
Projection Screen
Ecran de projection

(30) Priorität: 15.05.1998 DE 19821624
(43) Veröffentlichungstag der Anmeldung: 28.02.2001
(73) Patentinhaber: Harman Audio Electronic Systems GmbH, 94315 Straubing (DE)
(72) Erfinder: BACHMANN, Wolfgang, D-41516 Grevenbroich (DE); KRUMP, Gerhard, D-94374 Schwarzach (DE); REGL, Hans-Jürgen, D-40477 Düsseldorf (DE)
(74) Vertreter: Patentanwälte Westphal, Mussgnug & Partner
(86) Internationale Anmeldenummer: EP9903310
(87) Internationale Veröffentlichungsnummer: WO99060444

(56) Entgegenhaltungen:
- EP-A- 0 323 110
- GB-A- 353 439
- US-A- 1 817 630
- US-A- 5 007 707
- US-A- 5 025 474

## Beschreibung

### Technisches Gebiet

Die Erfindung befasst sich mit der Ausbildung von Projektionswänden, insbesondere mit solchen Projektionswänden, die im Zusammenhang mit der gleichzeitigen Schallwiedergabe stehen.

### Stand der Technik

Gemäß dem Stand der Technik werden im Wesentlichen zwei Arten von Projektionswänden unterschieden: Durchlicht- und Auflicht-Projektionswände. Bei den Durchlichtprojektionswänden wird das Bild auf der von dem Betrachter abgewandten Seite der Projektionswand erzeugt. Derartige Projektionsanordnungen sind beispielsweise als Fernsehbildröhren bekannt.

Bei den Auflichtprojektionswänden wird das Bild hingegen auf der Betrachterseite der Projektionswand erzeugt, indem die wiederzugebenden Bilder von einem von der Projektionswand abgesetzten Projektor auf die Projektionsebene der Projektionswand abgestrahlt werden. Diese Anordnungen, welche auch den Gegenstand der vorliegenden Erfindung bilden, sind beispielsweise aus der Kino- oder Diatechnik bekannt. Wesentlich bei diesen Anordnungen ist, dass im Vergleich zu den zuerst genannten Projektionsanordnungen diese Projektionswände relativ große Abmessungen aufweisen. So sind für den Kinobetrieb Projektionswände mit einer Projektionswanddiagonalen von 15 und mehr Metern keine Seltenheit.

Sollen neben den Bildereignissen auch Schallereignisse wiedergegeben werden, wird bei beiden Projektionsarten auf die allgemeine Lautsprechertechnik zurückgegriffen, indem entsprechende Lautsprecher oder Lautsprecherboxen im Wesentlichen an der Peripherie der jeweiligen Projektionswand angeordnet werden. Diese Anordnungsweise ist deshalb notwendig, um dem Betrachter den Eindruck zu vermitteln, dass die jeweiligen Schallereignisse von dem Geschehen auf der Projektionswand herrühren oder zumindest mit dem Bildgeschehen im Zusammenhang stehen.

Abgesehen davon, dass zu einer angemessenen Beschallung des Raumes vor großformatigen Projektionswänden eine Vielzahl von herkömmlichen Lautsprechern in entsprechender Größe zur Verfügung gestellt werden müssen, ist die Verwendung solcher Beschallungsanordnungen auch deshalb nachteilig, weil bei Anordnungen mit relativ kleinen Projektionswänden und guten Schallwiedergabeergebnissen der Raum- bzw. Flächenbedarf zur Schallwiedergabe im Vergleich zur Größe der Projektionswand bzw. des Bildes unangemessen groß ausfällt. Bei relativ großen Projektionswänden tritt das letztgenannte Phänomen weniger stark in Erscheinung. Jedoch hat sich gezeigt, dass bei Projektionsflächen mit großen Bilddiagonalen ein auffälliges Missverhältnis bei der Ortung von Bild- und Tonereignissen hervorgerufen wird, wenn die Beschallungsanordnung seitlich zu den Projektionsflächen angeordnet wird. Die Anordnung von Beschallungssystemen hinter der Projektionswand hat sich als ungünstig erwiesen, da hierdurch zwar die gegenseitige Zuordnung von Bild- und Tonereignissen bei großen Projektionswänden verbessert wird, gleichzeitig aber wegen des Einflusses der Projektionswand die Höhenwiedergabe inakzeptabel verschlechtert wird.

Aus der US 5,025,474 ist beispielsweise eine Projektionswand bekannt, welche aus mehreren Segmenten besteht, von denen zumindest einige als Schallabstrahlelemente zur Abstrahlung von Schallwellen aus der Projektionsebene der Projektionswand dienen. Vergleichbare Projektionswände sind darüber hinaus auch in US 1 817 630 A, GB 353 439 A, EP 0 323 110 A und US 5 007 707 A beschrieben. Jedoch wird auch bei diesen Anordnungen keine zufriedenstellende Höhenwiedergabe erreicht.

Daher liegt der Erfindung die Aufgabe zugrunde, eine Projektionswand anzugeben, welche die im Zusammenhang mit der Schallwiedergabe genannten Nachteile der bekannten Anordnung beseitigt.

### Darstellung der Erfindung

Die Aufgabe wird mit den in Anspruch 1 angegebenen Merkmalen gelöst. Vorteilhafte Aus- und Weiterbildungen der Erfindung sind den Ansprüchen 2 bis 6 entnehmbar.

Dadurch, dass die jeweilige Projektionswand wenigstens ein Segment aufweist, von welchem Schallwellen aus der Projektionsebene der Projektionswand abgestrahlt werden, ist eine sehr kompakte und platzsparende Anordnung zur gleichzeitigen Bild- und Tonübertragung geschaffen, welche nicht nur den Flächen- bwz. Raumbedarf auf die Größe der jeweiligen Projektionswand reduziert, sondern auch die Vereinigung der Wiedergabe von Bild- und Tonereignissen in einer Ebene sowie deren gegenseitige Zuordnung vollständig hergestellt.

Erreicht wird dies dadurch, dass die für die Wiedergabe bestimmter Frequenzbereiche optimiert ausgebildeten Schallwiedergabesegmente einer Projektionswand rechtwinklig zur Projektionsebene unterschiedliche an der Oberfläche der Projektionswand sich auswirkende Tiefen aufweisen.

Die maximal denkbare Klangfülle ist durch akustische Ausnutzung der vollen Fläche gegeben. Eine Höhendämpfung durch eine vorgehängte Leinwand entfällt vollständig.

Sind gemäß Anspruch 2 die jeweiligen Segmente einer Projektionswand an ihren Rändern mittels Verbindungselementen gegeneinander entkoppelt, lassen sich nicht nur in ein und derselben Projektionswand für die Wiedergabe bestimmter Frequenzbereiche optimiert ausgebildete Schallwiedergabesegmente integrieren, sondern darüber hinaus auch Bereiche oder Zonen schaffen, welche beispielsweise die verschiedenen Kanalinforationen bei Stereoübertragung übertragen.

Die Realisierung einer entkoppelten Verbindung zwischen den Segmenten ist gemäß Anspruch 3 dann besonders einfach, wenn die Segmente aus einer Kernschicht und zumindest einer Deckschicht bestehen. In diesem Fall kann die jeweilige Verbindung zwischen den Segmenten von der oder den Deckschichten und/oder der Kernschicht realisiert werden, indem die jeweilige Deckschicht und/oder Kernschicht auch die radialen Abstände zwischen benachbarten Segmenten überbrückt. Die Verwendung der Kernschicht als Verbindung zwischen einer Mehrzahl von Segmenten ist von besonderem Vorteil, weil in diesem Fall relativ große Stücke der Kernschicht einheitlich hergestellt werden können, bevor dann die Entkopplung der aus diesem Stück herzustellenden Segmente mittels von Einschnitten oder Ausfräsungen in der Kernschicht bewirkt wird.

Da gemäß Anspruch 4 die in einer Projektionswand integrierten Segmente bzw. Schallabstrahlsegmente nicht notwendig eine einheitliche Flächenausdehnung in der Projektionsebene der Projektionswand haben müssen, kann durch ihre Gestaltung und gegenseitige Zuordnung die Schallwiedergabe der jeweiligen Projektionswand sehr flexibel gestaltet werden.

Durch die Anordnung der für die Wiedergabe tiefer Frequenzen optimierten Segmente hauptsächlich im zentralen Bereich der Projektionswand wird die Basswiedergabe wesentlich verbessert, da die seitlich an die zur Bassübertragung vorgesehenen Segmente anschließenden Segmente bzw. Teile der Projektionswand zur Eindämmung des Dipolkurzschlusses dienen.

Ist gemäß Anspruch 6 zumindest die Projektionsfläche der Projektionswand nicht eben, sondern gewölbt ausgebildet, kann wegen der damit verbundenen Modifikation der Schallabstrahlung eine weitere Optimierung der Raumbeschallung herbeigeführt werden, indem zur Verbesserung der Schallwahrnehmung durch die - nicht notwendig einheitliche - Wölbung der Projektionsfläche beispielsweise bestimmte Bereiche im Abhörraum vor der Projektionswand gezielt angesprochen werden.

### Kurze Darstellung der Figuren

Es zeigen:
- Fig. 1: eine Perspektive einer Projektionswand;
- Fig. 2: eine Draufsicht auf eine Projektionswand;
- Fig. 3a-e: fünf Verbindungen zwischen Segmenten einer Projektionswand; und
- Fig. 4: die Rückseite einer Projektionswand.

### Wege zum Ausführen der Erfindung

Die Erfindung soll nun anhand der Figuren näher erläutert werden.

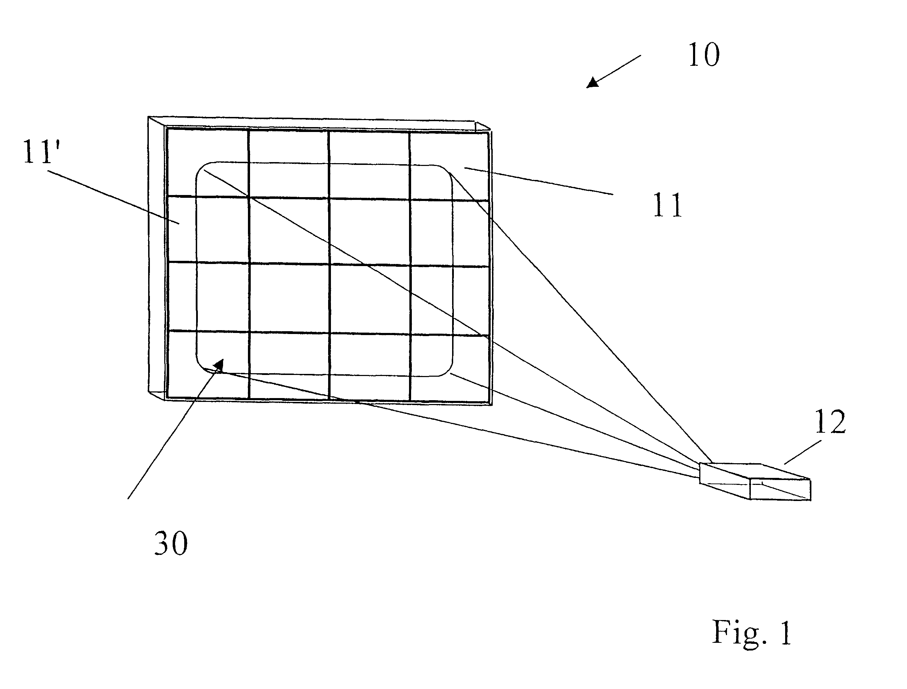

In Figur 1 ist eine Projektionswand 10 gezeigt, die aus einer Mehrzahl von Segmenten 11 gebildet ist. Im frontalem Abstand zur Projektionswand 10 ist ein Projektor 12 angeordnet, welcher Bilder auf die Projektionsebene 30 der Projektionswand 10 projiziert. Je nach Anwendung kann es sich bei diesem Projektor 12 um einen Dia- , Film-, LCD- oder Laserprojektor handeln.

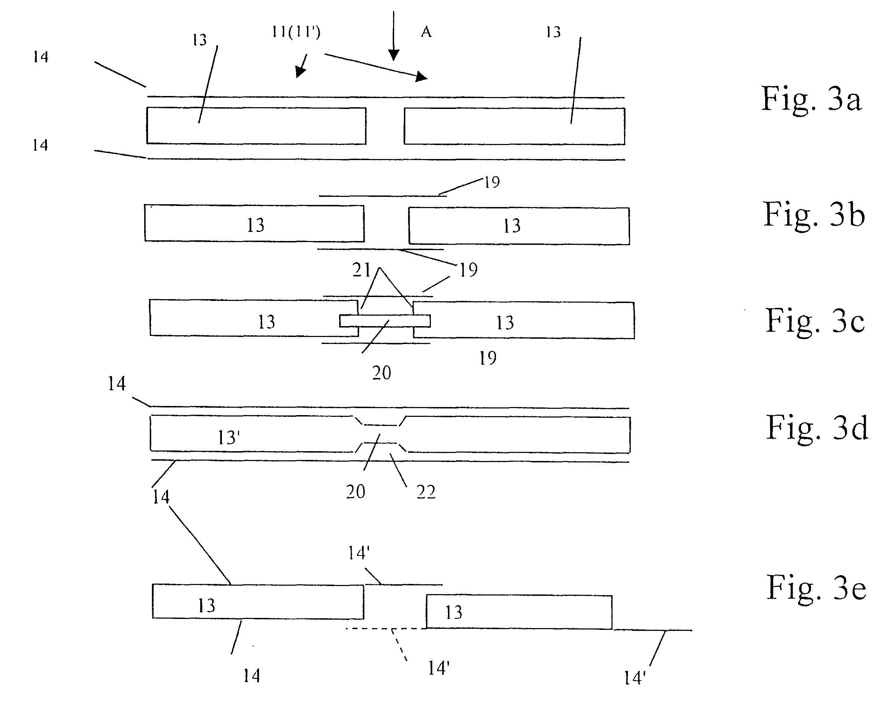

Jedes der in Figur 1 gezeigten Segmente 11 ist als Schallabstrahlsegement 11' ausgebildet. Wie schon im Zusammenhang mit der DE-A-19757097.6 ausgeführt ist, wird jedes Schallabstrahlsegment 11' von einer leichten Kernschicht 13 (Fig. 3a) und mindestens einer Deckschicht 14 (Fig.3a) gebildet, wobei die jeweils verwendeten Deckschichten 14 aus einem Material mit besonders hoher Dehnwellengeschwindigkeit bestehen und mit den Oberflächen der Kernschicht 13 verbunden sind, die jeweils die größten Flächenausdehnungen dieser Kernschicht 13 haben. Nur der Vollständigkeit halber sei darauf hingewiesen, daß die jeweiligen Schallabstrahlsegmente 11' beispielsweise mit elektrodynamischen Wandlern versehen sind, welche entsprechend der Ansteuerung in den Schallabstrahlsegmenten 11' Biegewellen hervorrufen. Nähere Einzelheiten hierzu sind der eben benannten Schrift entnehmbar.

Dadurch, daß die gesamte Projektionswand 10 aus Schallabstrahlsegmenten 11' bestehen kann, kann die gesamte zur Bildwiedergabe zur Verfügung stehende Projektionsebene 30 gleichzeitig auch zur Schallwiedergabe genutzt werden.

Neben dem schon angesprochenen Platzvorteil hat diese Art der Wiedergabe von Ton- und Bildereignissen auch den Effekt, daß ein Betrachter im Vergleich zu herkömmlichen Anordnungen die Bild- und Tonereignisse in einem viel stärkeren Maße miteinander verbindet. Dies ist darauf zurückzuführen, daß der Betrachter die Tonereignisse als aus dem jeweiligen Bildereignis kommend empfindet.

Im Zusammenhang mit Fig. 1 sei außerdem darauf hingewiesen, daß die dort gezeigte Projektionswand 10 eine schwache -nicht gezeigte- Wölbung aufweist. Diese -konkave- Wölbung wird vorliegend dadurch realisiert, daß alle Bereiche der Projektionswand 10 im wesentlichen den gleichen Abstand zur punktförmig wirkenden Bildquelle in Form des Projektors 12 haben, womit die Projektionsebene 30 der Projektionswand 10 in Frontansicht die Form einer offenen Schale einnimmt und die von einer solchen Projektionswand 10 gleichzeitig abgestrahlten Schallwellen eine stärkere Bündelung erfahren. Sollen die Schallwellen von einer Projektionswand 10 mehr gestreut wiedergeben werden, kann die Projektionswand 10 auch eine konvexe Wölbung erhalten. Auch ist es nicht notwendig, daß die jeweilige Krümmung der Projektionswand 10 für die gesamte Fläche der Projektionswand einheitlich ausgebildet ist. Vielmehr kann die jeweilige Projektionswand 10 auch eine Mehrzahl von verschieden großen Krümmungsradien aufweisen.

Auch wenn in Figur 1 die gesamte Projektionswand 10 mit Schallabstahlsegmenten 11' versehen ist, können in einem anderen -nicht dargestellten- Ausführungsbeispiel in der Projektionswand 10 auch Segmente 11 integriert sein, welche nicht als Schallabstrahlsegmente 11' ausgebildet sind. Derartige (Blind-) Segmente 11 können zur Befestigung und Abstützung der Projektionswände 10 am jeweiligen Aufstellungsort eingesetzt werden.

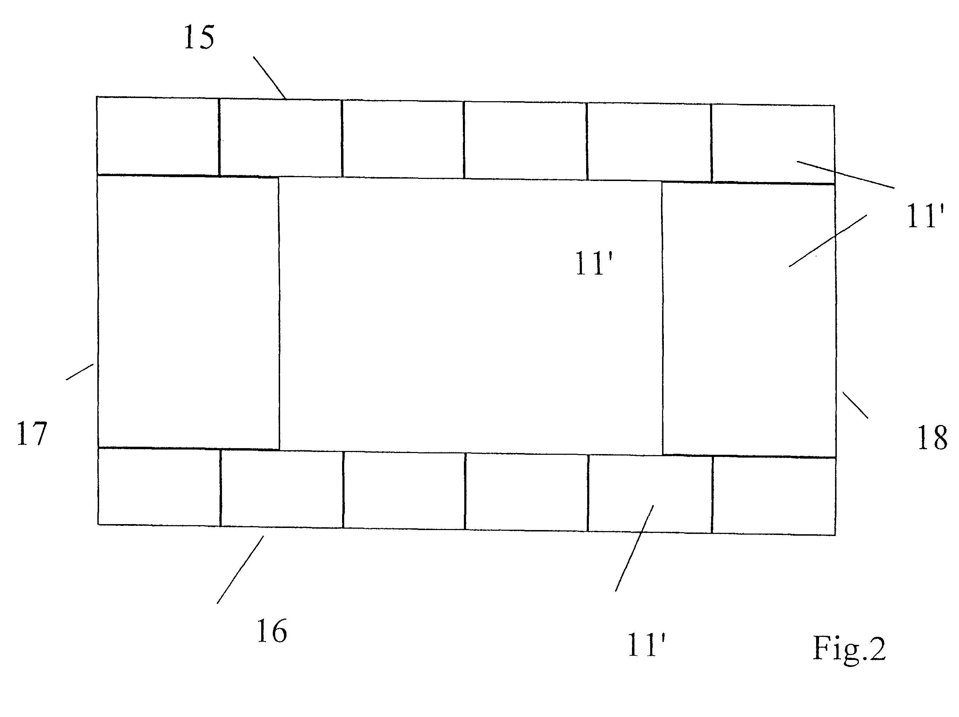

In Figur 2 ist als zweites Ausführungsbeispiel ebenfalls eine Projektionswand 10 gezeigt, deren sämtliche Segmente 11 als Schallabstrahlsegmente 11' ausgebildet sind. Abweichend zur Ausführung gemäß Figur 1 haben aber die Schallabstrahlsegmente 11' gemäß Figur 2 unterschiedlich große Flächenausdehnungen in der Projektionsebene 30. Das mit Abstand größte Schallabstrahlsegment 11' ist im zentralen Bereich der Projektionswand 10 angeordnet. Dieses Schallwiedergabesegment 11 'ist für die Wiedergabe tieffrequenter Tonereignisse optimiert ausgelegt. Am oberen und unteren Rand 15, 16 der Projektionswand 10 ist jeweils eine Zeile aus sechs Schallabstahlsegementen 11' plaziert, welche jeweils die kleinsten Flächenausdehnung in der Projektionsebene 30 haben und zur Abstrahlung hochfrequenter Tonereignisse eingesetzt werden. An den seitlichen Rändern 17, 18 des Projektionswand 10 ist jeweils ein Schallabstrahlsegment 11' vorgesehen, welches eine zwischen den eben benannten Schallabstrahlsegmenten 11' liegende Flächenausdehnung hat und zur Wiedergabe von mittelfrequenten Tonereignissen dient. Nur der Vollständigkeit halber sei darauf hingewiesen, die Tieftonwiedergabe nicht notwendig auf ein in der Mitte der Projektionswand 10 angeordnetes Schallabstrahlsegment 11' beschränkt sein muß. Vielmehr kann in einem anderen -nicht weiter dargestellten- Ausführungsbeispiel zur Wiedergabe tieffreguenter Töne der mittlere Bereich einer Projektionswand 10 oder auch die gesamte Projektionswand mit einer Vielzahl von nicht notwendig symmetrisch zueinander angeordneten Schallabstrahlsegmenten 11' versehen sein. Auch bei dieser Modifikation ist wesentlich, daß die (Baß-) Segmente 11' zum Vermeidung eines akustischen Kurzschlusses von anderen Segmenten 11 oder 11' umrandet werden. Aus gleichen Gründen ist es auch erforderlich, daß das jeweilige (Baß-)Segment 11' zumindest mit den benachbarten Segmenten 11, 11' mit Verbindungselementen 19, 20 verbunden sind, die für Schallwellen undurchlässig sind.

Die Verbindung zwischen den (Blind-) Segmenten 11 bzw. Schallabstrahlsegmenten 11' ist in den Figuren 3a bis 3e näher gezeigt.

Figur 3a zeigt zwei nebeneinander angeordnete Kernschichten 13, wobei zwischen den beiden Kernschichten 13 ein gegenseitiger Abstand A besteht. Die beiden Oberflächen der beiden gezeigten Kernschichten 13, welche die größte Flächenausdehnung haben, sind mit jeweils einer Deckschicht 14 verbunden. Da die obere und untere Deckschicht 14 für beide Segmente 11 (11') als gemeinsame Deckschicht 14 ausgebildet ist, wird von diesen Decksichten 14 gleichzeitig auch der für die Entkoppelung der beiden Segmente 11 (11') wesentliche Abstand A unterbrechungsfrei überdeckt. Nur der Vollständigkeit halber sei darauf hingewiesen, daß die beiden Deckschichten 14 zur besseren Darstellung der Verhältnisse einen geringen Abstand von den jeweiligen Oberflächen der Kernschichten 13 haben.

In Figur 3b sind zwei Kernschichten 13 gezeigt, die jeweils bereits mit einer oder zwei Deckschichten 14 (in Figur 3b nicht dargestellt) versehen sind. Zur Abdeckung des auch zwischen diesen Segmenten 11 (11') bestehenden Abstands A sowie zur Herstellung einer entkoppelten Verbindung sind zwei Streifen 19 vorgesehen, welche zur Abdeckung des Abstandes A mit den Deckschichten 14 der Kernschichten 13 beispielsweise verklebt sind.

In einem anderen -nicht dargestellten- Ausführungsbeispiel können die beiden in Figur 3b gezeigten Streifen 19 zur Verbindung der beiden Segmente 11(11') auch direkt, d.h. vor dem Aufbringen der Deckschichten 14 auf die Kernschichten 13 aufgeklebt werden. In diesem Fall können die beiden Deckschichten 14 auch -wie schon im Zusammenhang mit Fig. 3a erläutert- für beide Kernschichten 13 durchgängig ausgebildet werden, so daß dann die jeweilige Verbindung zwischen den beiden Segmenten 11 (11') aus einen Streifen 19 und einer den Streifen 19 überdeckenden Deckschicht 14 besteht.

Sofern im in Fig. 3b gezeigten Ausführungsbeispiel eine einheitliche Oberflächengestaltung gewünscht ist, können die Streifen 19 auch in der Dicke der Streifen 19 angepaßte Ausfräsungen (nicht gezeigt) in den Kernschichten 13 eingelassen sein.

Das Ausführungsbeispiel gemäß Figur 3c unterscheidet sich von der Ausführung gemäß Figur 3b nur dadurch, daß die Schmalseiten 21 der beiden Kernschichten 13 zusätzlich noch mit einem Verbindungselement 20 verbunden sind. Durch diese Verbindungsart haben die Streifen 19 im wesentlichen die Funktion, eine einheitliche Oberflächengestaltung zwischen zwei Segmenten 11 (11') herzustellen.

In Figur 3d ist für die beiden Segmente 11 (11') ein einheitlicher Kernschichtbereich 13' gezeigt. Dort, wo die anderen in Fig. 3 gezeigten Kernschichten 13 einen gegenseitigen seitlichen Abstand A einhalten, weist dieser Kernschichtbereich 13' zwei trapezförmig ausgebildete Ausfräsungen 22 auf, welche die Dicke der Kernschichtbereiche 13' schwächt und zur Entkoppelung der beiden Segmente 11 (11') beiträgt. Mithin wirkt der stehengebliebene Teil zwischen den beiden Segmenten 11(11') als Verbindungselement 20 i.S.d. Darstellung gemäß Fig. 3c. Auch in diesem Fall können die beiden Segmente 11(11') mit für beide Segmente 11(11') einheitlichen, d.h auch die Ausfräsungen 22 überdeckenden Deckschichten 14 versehen sein.

Figur 3e zeigt eine weitere Ausführungsform einer Verbindung zwischen zwei (Blind-) Segmenten 11 bzw. Schallabstrahlsegmenten 11'. Auch hier sind die beiden Kernschichten 13 beidseitig mit Deckfolien 14 versehen. Zur Realisierung der Verbindung zwischen den beiden Segmenten 11, (11') weist eine der Deckschichten 14 einen über die Sclunalseiten 21 der Kernschicht 13 überstehenden Bereich 14' auf. Diese überstehenden Bereiche 14' der Decksichten 14 können -so wie in Figur 3e gezeigt- zur Herstellung einer Verbindung zwischen zwei Segmenten 11 (11') genutzt werden, indem der überstehende Bereich 14' des einen Segments 11 (11') mit der Deckschicht 14 des anderen Segments 11 (11') verbunden wird. Die Vorteile, welche mit den gemäß Figur 3e ausgebildeten Segmenten 11 (11') verbunden sind, liegen darin, daß aus der Kernschicht 13 und Deckschichten 14 gebildete Segmente 11 (11') einfach und in großen Stückzahlen vorproduziert und mittels der überstehenden Bereiche 14' ohne großen Aufwand miteinander verbunden werden können.

Sofern die Verbindung zwischen zwei Segmenten 11 (11') beiderseits des Abstandes A ausgebildet werden soll, kann das jeweilige Segment 11(11') auch mit zwei überstehenden Bereichen 14' versehen sein. Letzteres ist für das rechte Segment 11 (11') gestrichelt dargestellt.

Im Zusammenhang mit den in Fig. 3a bis 3e dargestellten Ausführungsformen sei noch darauf hingewiesen, daß die gezeigten Verbindungen zwischen zwei Segmenten 11(11') zumindest dann schallunduchlässig ausgebildet sein sollten, wenn eines der so befestigten Segmente 11 (11') mit einem Schallabstrahlsegment 11' verbunden wird, welches zur Tieftonwiedergabe eingesetzt ist. Denn nur durch eine schallundurchlässige Verbindung wird sichergestellt, daß akustische Kurzschlüsse vermieden werden.

Außerdem sei in diesem Zusammenhang angemerkt, daß die Verbindungselemente 19, 20 durch ihre jeweiligen Federmassendämpfungseigenschaften auch gleichzeitig als mechanische Filter wirken und auch als solche gezielt zur Optimierung und /oder Beeinflußung der Schallabstrahleigenschaften eingesetzt werden können.

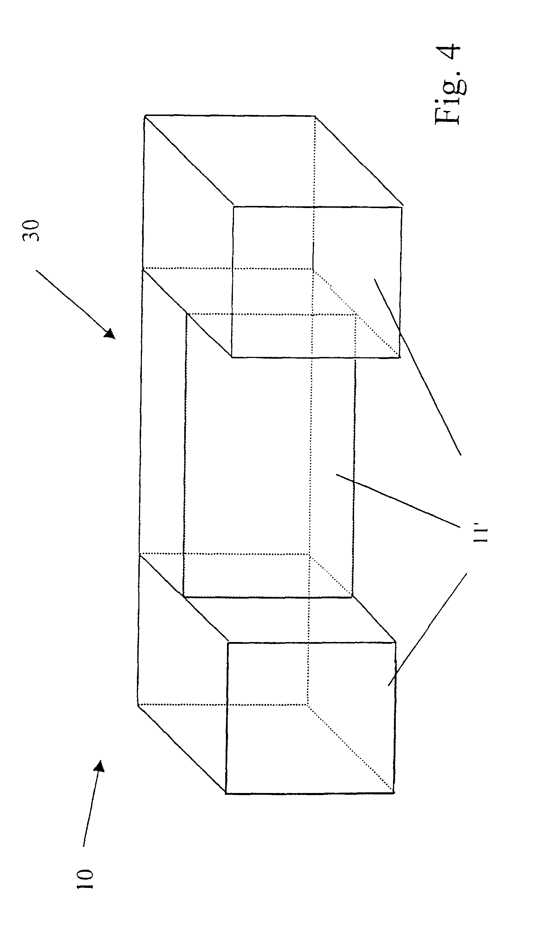

In Figur 4 ist die Rückansicht einer aus drei Schallabstrahlsegmenten 11' gebildeten Projektionswand 10 gezeigt. Deutlich ist dieser Darstellung entnehmbar, daß die verschiedenen Schallabstrahlsegmente 11' neben einer unterschiedlichen und schon im Zusammenhang mit Figur 2 erläuterten Flächenausdehnung auch eine unterschiedlich große Tiefe rechtwinklig zur Projektionsebene 30 der Projektionswand 10 haben können. Diese unterschiedliche Tiefe der Schallabstrahlsegmente 11' dient zur Optimierung der Schallwiedergabe bestimmter Bereiche der Projektionswand 10. Werden -wie in Figur 4 gezeigt- die verschiedenen Schallabstrahlsegmente 11' so zueinander kombiniert, daß sich die verschiedenen Tiefen der Schallabstrahlsegmente 11' nur an der Rückseite der Projektionswand 10 auswirken, bleibt die in Figur 4 nicht sichtbare Vorderfläche der Projektionswand 10 als profillose Projektionsebene 30 erhalten.

## Patentansprüche

1. Projektionswand (10) mit einer aus wenigstens zwei Segmenten (11) gebildeten Projektionsfläche (30), von denen
wenigstens zwei Segmente (11) Schallabstrahlsegmente (11') sind, mit welchen Schallwellen aus der Projektionsfläche (30) abstrahlbar sind, und die zur Wiedergabe unterschiedlicher Frequenzbereiche ausgelegt sind,
**dadurch gekennzeichnet,**
**daß** die verschiedene Frequenzbereiche übertragenden Schallabstrahlsegmente (11') in Richtung der Flächennormalen der Projektionsfläche (30) unterschiedliche auf die Schallwiedergabe und an der vorderen oder hinteren Oberfläche der Projektionswand sich auswirkende Tiefen aufweisen.

2. Projektionswand nach Anspruch 1, weiter
**dadurch gekennzeichnet,**
**dass** die Segmente (11) einer Projektionswand (10) an ihren Rändern mittels Verbindungselementen (19, 20) miteinander entkoppelt verbunden sind.

3. Projektionswand nach Anspruch 2, weiter
**dadurch gekennzeichnet,**
**dass** wenigstens die Schallabstrahlsegmente (11') aus einer Kernschicht (13) und zumindest einer Deckschicht (14) gebildet sind, wobei wenigstens eine Deckschicht mit einer der in der Projektionsebene (30) der Projektionswand (10) liegenden Oberflächen der Kernschicht 13 verbunden ist, und
**dass** die jeweiligen Verbindungselemente (19; 20) von der Kernschicht (13) und/oder einer der Deckschichten (14) gebildet sind.

4. Projektionswand nach einem der Ansprüche 1 bis 3, weiter
**dadurch gekennzeichnet,**
**dass** die verschiedenen Wiedergabezwecken dienenden Schallabstrahlsegmente (11') der Projektionswand (10) eine unterschiedlich große Flächenausdehnung in der Projektionsebene (30) der Projektionswand (10) haben.

5. Projektionswand nach Anspruch 4, weiter
**dadurch gekennzeichnet,**
**dass** das oder die Schallabstrahlsegmente (11'), welche im Wesentlichen zur Tieftonwiedergabe eingesetzt sind, hauptsächlich im zentralen Bereich der Projektionsebene (30) angeordnet und von den übrigen Segmenten (11) bzw. Schallabstrahlsegmenten (11') ganz oder auch nur teilweise umrandet sind.

6. Projektionswand nach einem der Ansprüche 1 bis 6, weiter
**dadurch gekennzeichnet,**
**dass** zumindest die Projektionsfläche (30) der Projektionswand (10), welche einem Projektor (12) zugewandt ist, gewölbt ausgebildet ist.

## Claims

1. Projection screen (10) with a projection surface (30) formed of at least two segments (11), of which at least two segments (11) are sound-radiating segments (11') capable of radiating sound waves from the projection surface (30) and designed to reproduce different frequency ranges, **characterised in that**, in the direction of the normal to the projection surface (30), the sound-radiating segments (11') transmitting the various frequency ranges are of different depths, which have an effect on sound reproduction and at the front or rear surface of the projection screen.

2. Projection screen according to Claim 1, further **characterised in that** the segments (11) of a projection screen (10) are connected to one another in a decoupled fashion at their edges by means of connecting elements (19, 20).

3. Projection screen according to Claim 2, further **characterised in that** at least the sound-radiating segments (11') are formed of a core layer (13) and at least one cover layer (14), at least one cover layer being connected to one of the surfaces of the core layer (13), which are positioned in the projection plane (30) of the projection screen (10), and **in that** the respective connecting elements (19; 20) are formed by the core layer (13) and/or one of the cover layers (14).

4. Projection screen according to one of Claims 1 to 3, further **characterised in that** the sound-radiating segments (11') of the projection screen (10), which are designed for different reproduction tasks, have different size areas in the projection plane (30) of the projection screen (10).

5. Projection screen according to Claim 4, further **characterised in that** the sound-radiating segment or segments (11') which is/are essentially used for reproducing low frequencies is/are arranged primarily in the central region of the projection plane (30) and is/are surrounded completely or only partially by the remaining segments (11) or sound-radiating segments (11').

6. Projection screen according to one of Claims 1 to 6, further **characterised in that** at least the projection surface (30) of the projection screen (10) which faces a projector (12) is curved.

## Revendications

1. Paroi de projection (10) avec une surface de projection (30) formée au moins de deux segments (11), dont au moins deux segments (11) sont des segments d'émission des sons (11'), avec lesquels les ondes sonores peuvent être émises à partir de la surface de projection (30) et qui sont adaptés à la restitution de domaines de fréquence différents,
**caractérisée en ce que**
les segments d'émission des sons (11') qui transmettent des domaines de fréquence différents présentent en direction de la verticale de surface de la surface de projection (30) des profondeurs différentes qui ont un effet sur la restitution des sons et sur la surface avant ou arrière de la paroi de projection.

2. Paroi de projection selon la revendication 1,
caractérisée de plus en ce que
les segments (11) d'une paroi de projection (10) sont liés sur leurs bords l'un à l'autre de façon séparée au moyen d'éléments de liaison (19, 20).

3. Paroi de projection selon la revendication 2,
**caractérisée de plus en ce qu'**
au moins les segments d'émission des sons (11') sont formés d'une couche centrale (13) et au moins d'une couche de recouvrement (14), au moins une couche de recouvrement étant liée à l'une des surfaces de la couche centrale 13 placées dans le plan de projection (30) de la paroi de projection (10) et
que chacun des éléments de liaison (19 ; 20) est formé par la couche centrale (13) et/ou par une des couches de recouvrement (14).

4. Paroi de projection selon l'une des revendications 1 à 3,
**caractérisée de plus en ce que**
les segments d'émission des sons (11') de la paroi de projection (10) servant à divers buts de restitution ont des dimensions de surface de grandeurs différentes dans le plan de projection (30) de la paroi de projection (10).

5. Paroi de projection selon la revendication 4,
**caractérisée de plus en ce que**
le ou les segments d'émission des sons (11') qui sont essentiellement utilisés pour restituer des sons graves sont placés principalement dans la zone centrale du plan de projection (30) et sont entièrement ou seulement partiellement entourés par les autres segments (11) ou segments d'émission des sons (11').

6. Paroi de projection selon l'une des revendications 1 à 5,
**caractérisée de plus en ce qu'**
au moins la surface de projection (30) de la paroi de projection (10) qui est tournée vers un projecteur (12) est formée de façon courbe.
